**Europäisches Patentamt**

**European Patent Office**

**Office européen des brevets**

(11) Veröffentlichungsnummer : **0 033 113**
**B1**

# (12) EUROPÄISCHE PATENTSCHRIFT

(45) Veröffentlichungstag der Patentschrift :
02.05.84

(21) Anmeldenummer : 81100360.7

(22) Anmeldetag : 19.01.81

(51) Int. Cl.³ : **C 02 F   3/30**

(54) **Verfahren und Vorrichtung zur biologischen Reinigung von Abwasser.**

(30) Priorität : 25.01.80 DE 3002604

(43) Veröffentlichungstag der Anmeldung :
05.08.81 Patentblatt 81/31

(45) Bekanntmachung des Hinweises auf die Patenterteilung : 02.05.84 Patentblatt 84/18

(84) Benannte Vertragsstaaten :
AT BE CH DE FR GB IT LI NL SE

(56) Entgegenhaltungen :
DE-A- 2 616 212
DE-A- 2 900 687
DE-A- 2 909 168
GB-A- 2 000 982

(73) Patentinhaber : BASF Aktiengesellschaft
Carl-Bosch-Strasse 38
D-6700 Ludwigshafen (DE)

(72) Erfinder : Braha, Alexandru
Albrecht-Duerer-Ring 33 A
D-6710 Frankenthal (DE)
Erfinder : Daucher, Hans, Dr.
Dubliner Strasse 23
D-6700 Ludwigshafen (DE)
Erfinder : Hess, Klaus, Dr.
Sonnenwendstrasse 40
D-6702 Bad Duerkheim (DE)
Erfinder : Kroetzsch, Peter, Dr.
Von-Siemens-Strasse 17
D-6834 Ketsch (DE)
Erfinder : Merkel, Helmut
Ostendstrasse 35
D-6840 Lampertheim (DE)
Erfinder : Roedl, Roland, Dr.
Robert-Schumann-Strasse 4
D-6730 Neustadt (DE)
Erfinder : Schwaegerl, Walter
Kantstrasse 24
D-6711 Hessheim (DE)
Erfinder : Stickel, Richard
Auf dem Koeppel
D-6702 Bad Duerkheim (DE)

Jouve, 18, rue St-Denis, 75001 Paris, France

## Verfahren und Vorrichtung zur biologischen Reinigung von Abwasser

Die Anmeldung betrifft ein Verfahren und eine Vorrichtung zur biologischen Reinigung von Abwasser, das mit Stickstoff als Ammonium, Nitrit, Nitrat oder in organischer Bindung verschmutzt ist, durch Oxidation des Stickstoffes unter aeroben und Reduktion des Stickstoffes (Denitrifikation) unter anaeroben Bedingungen, wobei eine Rezirkulation zwischen einer aeroben und anaeroben Behandlungsstufe stattfindet.

Aus der GB-A-2 000 982 ist ein Kreislauf der eingangs genannten Art bekannt, bei dem die von einem Belüftungskreisel erzeugte Zirkulationsströmung im Zusammenwirken mit schaufelförmig ausgestellten Klappen in der Trennwand zwischen der aeroben und anaeroben Behandlungsstufe ein Umlenken der Strömung aus einer Rotation in eine helicale Strömungsrichtung bewirkt. Die beschriebenen technischen Mittel zum Erzeugen der genannten Strömung sind jedoch vergleichsweise aufwendig.

Weitere einschlägige Verfahren und Vorrichtungen sind z. B. bekannt aus den Druckschriften DE-B-22 33 801 und DE-A-23 33 675.

Im Verfahren nach der DE-B 22 33 801 wird in der biologisch schwach belasteten zweiten Stufe einer zweistufigen Anlage mit getrennten Schlammkreisläufen Ammonium möglichst weitgehend nitrifiziert und zumindest ein Teil des auf diese Weise nitrifizierten Abwassers zwecks Denitrifikation aus dem Absetzbecken der zweiten Stufe in die erste Stufe zurückgeleitet.

Nachteile dieses Verfahrens sind, daß die Denitrifikation im sauerstofffreien Abwasser des Nachklärbeckens der ersten Stufe erfolgen muß und der denitrifizierte Stickstoff zum Aufschwimmen des Schlammes im Nachklärbecken führen kann und daß das in natürliche Gewässer abfließende Abwasser die gleiche Konzentration oxidierten Stickstoffes enthält, wie der in die erste Stufe zur Denitrifikation zurückgeführte Teil des Abwassers.

Im Verfahren nach der DE-A-23 33 675 wird Abwasser in einer Reinigungsanlage mit drei Behältern, von denen wenigstens zwei abwechselnd als Zufuhrbehälter und wenigstens ein Behälter als Klärbehälter dienen, gereinigt.

Die beiden als Zufuhrbehälter dienenden Behälter werden in Perioden abwechselnd durch Luftbegasung aerob und durch Umwälzen ohne Sauerstoffzufuhr anaerob betrieben. Der jeweils anaerob betriebene Behälter wird für die Dauer des anaeroben Betriebes mit dem als Klärbehälter dienenden Behälter verbunden.

Nachteil dieses Verfahrens ist, daß für den wechselweisen Betrieb von drei Behältern ein hoher Aufwand an Meß- und Regeleinrichtungen erforderlich ist, daß in der Zeit zwischen Umschalten der Behälter und Umstellung des Stoffwechsels der fakultativ arbeitenden Mikroben wesentlich höhere Stickstofffrachten als Ammonium oder Nitrat in den Ablauf gelangen und daß bei längeren Umschaltpausen das für die Denitrifikation erforderliche Substrat fehlt, so daß keine Denitrifikation mehr stattfinden kann.

Der vorliegenden Erfindung lag die Aufgabe zugrunde, ohne Rückführung eines Teilstromes des biologisch gereinigten Wasser mit dem darin gelösten oxidierten Stickstoff in eine vorgeschaltete biologische Stufe und ohne Umschaltungen des hydraulischen Wasserflusses das Abwasser kontinuierlich zu denitrifizieren.

Diese Aufgabe wird erfindungsgemäß dadurch gelöst, daß das zu behandelnde Abwasser im Gemisch mit Belebtschlamm in einem Begasungsbecken durch sauerstoffhaltige Gasblasen, die von unten zugeführt werden, gleichzeitig sowohl mit gelöstem Sauerstoff zur Oxidation von Kohlenstoff- und Stickstoffverbindungen angereichert, als auch durch den Auftrieb der Gasblasen nach oben transportiert wird, an der Flüssigkeitsoberfläche Gas abgibt und infolge der höheren mittleren Dichte des gasärmeren Gemisches zum einen Teil im Begasungsbecken selbst wieder nach unten der Begasung zuströmt, zum anderen Teil in ein vom Begasungsbecken durch eine Trennwand getrenntes Denitrifikationsbecken durch eine an der Flüssigkeitsoberfläche angeordnete Öffnung in der Trennwand überfließt, dort mit dem Inhalt des Denitrifikationsbeckens durchmischt wird und durch eine bodennahe Öffnung in der Trennwand wieder in das Begasungsbecken zurückströmt.

Da den Mikroorganismen zur effektiven Veratmung des Nitrat- und Nitritsauerstoffs biologisch abbaubares Material zur Verfügung stehen muß, ist es vorteilhaft, daß in das Denitrifikationsbecken Schlamm aus einer dem Begasungsbecken vorgeschalteten Belebungsstufe als Substrat für die Denitrifikation zugeführt wird.

Da der nitrifizierende Schlamm relativ schwach belastet ist, kann seine Fähigkeit zur Adsorption und Inkorporation von Abwasserinhaltsstoffen dadurch vorteilhaft genutzt werden, daß der im Begasungsbecken gebildete Überschußschlamm in eine vorgeschaltete Belebungsstufe zurückgeführt wird.

Da einerseits der nitrifizierende Schlamm nur unter relativ schwacher Belastung schneller wächst als nichtnitrifizierende Mikroben, andererseits aber Substrat zur Denitrifikation ausreichend zur Verfügung stehen muß, ist es vorteilhaft, daß das Abwasser durch ein nichtnitrifizierendes Verfahren so weitgehend vorbehandelt wird, daß der im Abwasser verbleibende $BSB_5$ für den Stoffwechsel der entstehenden, fakultativ anaeroben Mikroben gerade ausreicht.

Zur Durchführung des erfindungsgemäßen Verfahrens bestand die Aufgabe, ein geeignetes Belebungsbecken zu entwickeln.

Diese Aufgabe wird erfindungsgemäß dadurch gelöst, daß am Boden des Belebungsbeckens Strahldüsen parallel waagerecht liegend angeordnet sind, das Belebungsbecken mittels einer vertikalen Trennwand in ein Begasungsbecken und ein Denitrifikationsbecken aufgeteilt ist, wobei beide Teile Strahldüsen enthalten und Öffnungen in der Trennwand im Bereich der Flüssigkeitsoberfläche und in Bodennähe beide Beckenteile miteinander verbinden.

Je nach Abbaubarkeit der Abwasserinhaltsstoffe ist es vorteilhaft, daß die Trennwand das Belebungsbecken im Volumenverhältnis 1 : 1 bis 1 : 10 unterteilt.

Zur Vermeidung von Inhomogenitäten in den jeweiligen Teilen des Belebungsbeckens ist es zur raschen Verteilung des im Bereich schwacher Turbulenzen am Beckenboden überströmenden Gemisches vorteilhaft, daß die untere Öffnung in der Trennwand im Saugbereich der Strahldüsen des Begasungsbeckens angeordnet ist.

Um die Verweilzeit des Gemisches im aeroben und anaeroben Teil des Belebungsbeckens effektiv an die biologischen Erfordernisse anpassen zu können, ist es vorteilhaft, daß die Querschnittsfläche der oberen und/oder der unteren Öffnung in der Trennwand während des Betriebes des Belebungsbeckens verändert werden kann.

Die Erfindung wird nachstehend anhand der Zeichnungen näher erläutert. Es zeigen

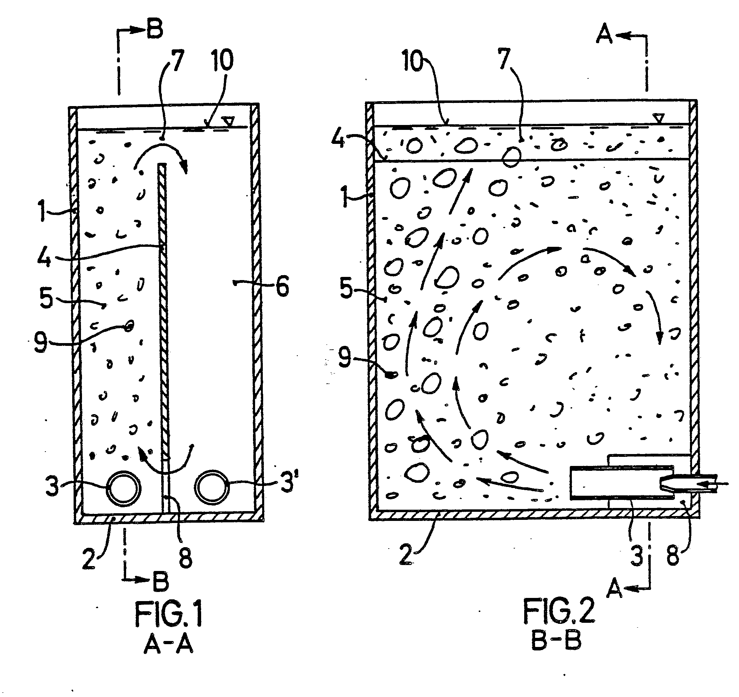

Figur 1   einen Schnitt A-A quer zur Trennwand des Belebungsbeckens,

Figur 2   einen Schnitt B-B parallel zur Trennwand des Belebungsbeckens.

Eine Trennwand 4 teilt das Belebungsbecken 1 in ein Begasungsbecken 5 und ein Denitrifikationsbecken 6 im Volumenverhältnis 1 : 1. Beispielsweise beträgt die Höhe des Belebungsbeckens 1,10 m, seine Breite 3,5 m und seine Länge 7,5 m. Die Größe der Öffnungen 7 und 8 in der Trennwand 4 kann durch Einlegen von Balken den Erfordernissen des biologischen Abbaues angepaßt werden.

Nur wenige Zentimeter über dem Beckenboden 2 ist in jedem Beckenteil 5, 6 je eine Strahldüse 3, 3′ angeordnet. Bei größeren Anlagen können je Beckenteil mehrere Strahldüsen angeordnet werden. Die Versorgung der Strahldüsen 3, 3′ erfolgt von außen durch die Wand des Belebungsbeckens 1. Die Strahldüsen 3, 3′ dienen sowohl der Sauerstoffvorsorgung, als auch dem Strömungsantrieb. Durch die Strahldüse 3 wird im Begasungsteil 5 sauerstoffhaltiges Gas feinverteilt. Das Gasblasen 9 enthaltende Gemisch steigt vorwiegend an der angestrahlten Wand nach oben, gibt an der Oberfläche 10 den überwiegenden Teil des sauerstoffärmeren Gases an die Umgebung ab und strömt, durch die Gasabgabe spezifisch schwerer geworden, wieder der unten liegenden Strahldüse 3 zu.

Die Strahldüse 3′ wird vorzugsweise ohne Gaszufuhr betrieben, damit in Denitrifikationsbecken 6 ein zur Denitrifikation des oxidierten Stickstoffes ausreichendes Sauerstoffdefizit herrscht. Der Treibflüssigkeitsstrahl der Strahldüse 3′ erzeugt im Beckenteil 6 eine zur Suspendierung ausreichende Turbulenz.

Durch den Unterschied des Gasinhaltes der Beckenteile 5 und 6 entsteht eine Zirkulationsströmung zwischen beiden Beckenteilen 5, 6 durch die Öffnungen 7, 8 hindurch.

Je nach $BSB_5$ und Stickstoffgehalt des Abwassers kann die Düse 3′ ohne oder mit sauerstoffhaltigem Gas betrieben werden.

Die Zirkulation des Belebtschlammgemisches zwischen den Becken 5 und 6 kann dann durch das Verhältnis der den Strahldüsen 3 und 3′ zugeführten Gasmengen gesteuert werden. Begrenzend für die der Strahldüse 3′ zugeführten Gasmenge ist die Denitrifikation im Beckenteil 6.

**Ansprüche**

1. Verfahren zur biologischen Reinigung von Abwasser, das mit Stickstoff als Ammonium, Nitrit, Nitrat oder in organischer Bindung verschmutzt ist, durch Oxidation des Stickstoffes unter aeroben und Reduktion des Stickstoffes unter anaeroben Bedingungen, wobei eine Rezirkulation zwischen einer aeroben und anaeroben Behandlungsstufe stattfindet, dadurch gekennzeichnet, daß das zu behandelnde Abwasser im Gemisch mit Belebtschlamm in einem Begasungsbecken durch sauerstoffhaltige Gasblasen, die von unten zugeführt werden, gleichzeitig sowohl mit gelöstem Sauerstoff zur Oxidation von Kohlenstoff- und Stickstoffverbindungen angereichert, als auch durch den Auftrieb der Gasblasen nach oben transportiert wird, an der Flüssigkeitsoberfläche Gas abgibt und infolge der höheren mittleren Dichte des gasärmeren Gemisches zum einen Teil im Begasungsbecken selbst wieder nach unten der Begasung zuströmt, zum anderen Teil in ein vom Begasungsbecken durch eine Trennwand getrenntes Denitrifikationsbecken durch eine an der Flüssigkeitsoberfläche angeordnete Öffnung in der Trennwand überfließt, dort mit dem Inhalt des Denitrifikationsbeckens durchmischt wird und durch eine bodennahe Öffnung in der Trennwand wieder in das Begasungsbecken zurückströmt.

2. Verfahren nach Anspruch 1, dadurch gekennzeichnet, daß in das Denitrifikationsbecken Schlamm aus einer dem Begasungsbecken vorgeschalteten Belebungsstufe als Substrat für die Denitrifikation zugeführt wird.

3. Verfahren nach Anspruch 1 oder 2, dadurch gekennzeichnet, daß der im Begasungsbecken gebildete Überschußschlamm in eine vorgeschaltete Belebungsstufe zurückgeführt wird.

4. Verfahren nach einem der Ansprüche 1 bis 3, dadurch gekennzeichnet, daß das Abwasser durch ein nichtnitrifizierendes Verfahren so weitgehend vorbehandelt wird, daß der im Abwasser verbleibende $BSB_5$ für den Stoffwechsel der entstehenden, fakultativ anaeroben Mikroben gerade ausreicht.

5. Belebungsbecken zur Durchführung des Verfahrens nach einem oder mehreren der Ansprüche 1 bis 4, mit Einrichtungen für eine Rezirkulation zwischen einer aeroben und anaeroben Behandlungsstufe, dadurch gekennzeichnet, daß am Boden des Belebungsbeckens Strahldüsen (3, 3') parallel waagerecht liegend angeordnet sind, das Belebungsbecken (1) mittels einer vertikalen Trennwand (4) in ein Begasungsbecken (5) und ein Denitrifikationsbecken (6) aufgeteilt ist, wobei beide Teile (5, 6) Strahldüsen enthalten und Öffnungen (7, 8) in der Trennwand (4) im Bereich der Flüssigkeitsoberfläche (10) und in Bodennähe beide Beckenteile (5, 6) miteinander verbinden.

6. Belebungsbecken nach Anspruch 5, dadurch gekennzeichnet, daß die Trennwand (4) das Belebungsbecken (1) im Volumenverhältnis 1 : 1 bis 1 : 10 unterteilt.

7. Belebungsbecken nach Anspruch 5 und 6, dadurch gekennzeichnet, daß die untere Öffnung (8) in der Trennwand (4) im Saugbereich der Strahldüsen (3) des Begasungsbeckens (5) angeordnet ist.

8. Belebungsbecken nach Anspruch 5 bis 7, dadurch gekennzeichnet, daß die Querschnittsfläche der oberen und/oder der unteren Öffnung (7, 8) in der Trennwand (4) während des Betriebes des Belebungsbeckens (1) verändert werden kann.

## Claims

1. A process for the biological purification of effluent which is contaminated with nitrogen in the form of ammonium, nitrite or nitrate ions or in the form of organic compounds, by oxidizing the nitrogen under aerobic conditions and reducing the nitrogen under anaerobic conditions, recirculation taking place between an aerobic and an anaerobic treatment stage, wherein the effluent to be treated, mixed with activated sludge, is subjected, in an aeration basin, to oxygen-containing gas bubbles introduced from below and is simultaneously enriched with dissolved oxygen, to oxidize carbon compounds and nitrogen compounds, and transported upward by the buoyancy of the gas bubbles, releases gas at the surface of the liquid and, due to the higher average density of the mixture of lower gas content, one part automatically flows downward again in the aeration basin, to undergo further aeration, whilst the other part overflows into a denitrification basin, which is separated from the aeration basin by a partition, through an opening arranged in the partition at the surface of the liquid, is mixed with the contents of the denitrification basin, and flows back to the aeration basin through an opening aranged in the partition near the bottom.

2. A process as claimed in claim 1, wherein sludge from an activated sludge stage upstream of the aeration basin is fed into the denitrification basin to serve as the substrate for the denitrification.

3. A process as claimed in claim 1 or 2, wherein the excess sludge formed in the aeration basin is recycled to an upstream activated sludge stage.

4. A process as claimed in anay of claims 1 to 3, wherein the effluent is pretreated, by a non-nitrifying process, to the point where the residual biochemical oxyen demand, $BOD_5$, in the effluent just suffices for the metabolism of the optionally anaerobic microbes formed.

5. An activated sludge basin for carrying out the process as claimed in one or more of claims 1 to 4, comprising means for effecting recirculation between an aerobic and an anaerobic treatment stage, wherein jet nozzles (3, 3') are arranged parallel, and horizontally, at the bottom of the activated sludge basin (1), a vertical partition (4) divides the basin (1) into an aeration compartment (5) and a denitrification compartment (6), the two compartments (5, 6) possessing jet aerators, and openings (7, 8) in the partition (4) connect the two compartments (5, 6) in the region of the surface of the liquid (10), and in the vicinity of the bottom.

6. An activated sludge basin as claimed in claim 5, wherein the partition (4) divides the activated sludge basin (1) in a volumetric ratio of from 1 : 1 to 1 : 10.

7. An activated sludge basin as claimed in claims 5 and 6, wherein the lower opening (8) in the partition (4) is located in the intake region of the jet aerators (3) of the aeration compartment (5).

8. An activated sludge basin as claimed in claims 5 to 7, wherein the cross-section of the upper and/or lower openings (7, 8) in the partition (4) can be varied during the operation of the activated sludge basin (1).

## Revendications

1. Procédé d'épuration biologique d'eaux usées, souillées par de l'azote, sous forme d'ammonium, nitrite, nitrate ou en liaison organique, par oxydation de l'azote en conditions aérobies et réduction de l'azote en conditions anaérobies, une recirculation s'effectuant entre un étage de traitement aérobie et un étage anaérobie, caractérisé par le fait que l'eau usée à traiter, en mélange avec de la boue activée, est, dans un bassin de gazéification, par des bulles de gaz oxygénées, amenées du bas, simultanément aussi bien enrichie de l'oxygène dissous, par l'oxydation des composés carbonés et azotés, qu'entraînée vers le haut par la poussée des bulles de gaz, du gaz se dégage à la surface du liquide et, par suite de la densité moyenne accrue du mélange appauvri en gaz, réafflue par partie à la partie inférieure du bassin de gazéification, et par une autre partie déborde dans un bassin de dénitrification, séparé du bassin de gazéification par une paroi, grâce à une ouverture dans cette paroi située dans la zone de surface du liquide, et s'y mélange avec le contenu du bassin de dénitrification pour retourner à nouveau dans le bassin de gazéification par une ouverture, voisine du fond, de la paroi séparatrice.

2. Procédé selon la revendication 1, caractérisé par le fait qu'est amenée, dans le bassin de dénitrification, comme substrat pour cette dénitrification, de la boue provenant d'un étage d'activation prévu en amont du bassin de gazéification.

3. Procédé suivant la revendication 1 ou 2, caractérisé par le fait que la boue en excès formée dans le bassin de gazéification est renvoyée dans un étage d'activation prévu en amont.

4. Procédé selon l'une des revendications 1 à 3, caractérisé par le fait que l'eau usée est prétraitée, par un processus non nitrifiant, de façon assez large pour que le $BSB_5$ restant dans l'eau usée soit juste suffisant pour le métabolisme des microbes produits, éventuellement anaérobies.

5. Bassin d'activation pour la mise en œuvre du procédé selon l'une ou plusieurs des revendications 1 à 4, avec des moyens pour une recirculation entre un étage d'activation aérobie et un étage anaérobie, caractérisé par le fait qu'au fond du bassin d'activation, sont disposés horizontalement des éjecteurs (3, 3') parallèles, le bassin d'activation (1) est subdivisé, par une paroi séparatrice (4) verticale, en un bassin de gazéification (5) et un bassin de dénitrification (6), les deux parties (5, 6) contenant des éjecteurs et des ouvertures (7, 8) dans la paroi séparatrice (4), dans la zone de surface du liquide (10) et au voisinage du fond, relient entre eux les deux parties de bassin (5, 6).

6. Bassin d'activation selon la revendication 5, caractérisé par le fait que la paroi séparatrice (4) subdivise le bassin d'activation (1), dans un rapport en volume de 1/1 à 1/10.

7. Bassin d'activation selon la revendication 5 et 6, caractérisé par le fait que l'ouverture inférieure (8) dans la paroi séparatrice (4) est située dans la zone d'aspiration des éjecteurs (3) du bassin de gazéification (5).

8. Bassin d'activation selon l'une des revendications 5 à 7, caractérisé par le fait que l'on peut faire varier la surface de section de l'ouverture (7, 8) supérieure et/ou inférieure dans la paroi séparatrice (4) pendant l'utilisation du bassin d'activation (1).

FIG.1
A-A

FIG.2
B-B